# EUROPEAN PATENT APPLICATION

(11) **EP 2 075 370 A1**
(43) Date of publication of application: **01.07.2009**
(21) Application number: 07830463.1
(22) Date of filing: 24.10.2007
(51) Int. Cl.: D06M 15/37, C08J 7/04, C09K 3/16, D06M 15/63

(54) **METHOD FOR MAKING MATERIAL CONDUCTIVE, METHOD FOR MANUFACTURING CONDUCTIVE MATERIAL, AND CONDUCTIVE MATERIAL**

(30) Priority: 24.10.2006 JP 2006288542
(71) Applicant: Mitsubishi Rayon Co. Ltd., Minato-ku Tokyo 108-8506 (JP)
(72) Inventor: UZAWA, Masashi, Toyohashi-shi Aichi 4408601 (JP)
(74) Representative: HOFFMANN EITLE
(86) International application number: PCT/JP2007/070729
(87) International publication number: WO 2008/050801

(57) **Abstract**

Disclosed is a method for giving electric conductivity to a material, by which a conductive material having excellent water resistance and sufficient antistatic properties even at a low temperature and a low humidity can be easily obtained at low cost. In the method, electric conductivity is given to a base material (A) having a nitrogen-containing functional group by soaking the base material (A) in a liquid containing a conductive polymer (B) having at least one kind of sulfonic group and carboxyl group while holding the liquid at a temperature in the range of from 30 to 130°C. A conductive material to be obtained by such a method is also disclosed.

## Description

### TECHNICAL FIELD

The present invention relates to a method for giving electric conductivity to a material, a method for producing a conductive material, and a conductive material obtained by the method.
The present application claims the priority of Japanese Patent Application No. 2006-288,542 filed on October 24, 2006, the contents of which are incorporated herein by reference.

### BACKGROUND ART

Since a fiber is an electric insulating material, static electricity charged on the fiber by contact or friction is not easily leaked. Therefore, a variety of problems are caused, such as clinging of clothes, adhesion of dust or dirt, malfunction of electronic equipment, and a spark by electric discharge of static electricity that has appeared on a human body.

As a method to give antistatic properties to a fiber, for example, the following methods are known.
(1) A method to apply an oil solution having antistatic properties to a fiber.
(2) A method to blend a conductive fiber formed by using a spinning dope blended with an antistatic agent, with a normal fiber.
However, by the methods of (1) and (2), drape that the fiber originally has is liable to be deteriorated.

As a method to solve said issue, the following method is known. (3) A method to blend a small quantity of a conductive fiber formed by using a spinning dope blended with electrically conductive fine particles such as carbon and metal, with a normal fiber (Patent Document 1).
However, the fiber provided by the method (3) is a mixture of a conductive fiber with an insulating fiber (a normal fiber), it is necessary to increase a content of the conductive fiber to realize sufficient antistatic properties, because antistatic property is determined by the content of the conductive fiber. As a result, fiber strength and drape that a fiber originally has are liable to be deteriorated. In addition, increasing the content of the expensive conductive fiber increases cost, and hence use of the fiber thus obtained is liable to be limited.

As other methods to give antistatic properties to a fiber, the following methods are known.
(4) A method to attach an antistatic agent to a fiber surface.

As the antistatic agent, a surfactant is usually used. Resistivity of the whole fiber can be lowered by using the surfactant. However, there are problems such that electric conductivity enough for giving sufficient antistatic properties to the fiber cannot be provided; antistatic effect is unstable because electric conductivity of the surfactant varies with humidity; and the surfactant loses an effect of water-repellent finish given on the fiber surface. Therefore, antistatic functions by a conductive agent that exhibits low humidity dependence is desired.

Conductive polymers such as polyaniline and polypyrrole are mentioned as said conductive agent. However, polyaniline and polypyrrole are poor in processability and it is difficult to make them attached to a fiber surface because solvents in which they can be dissolved are limited.
As a conductive polymer excellent in solubility to a solvent, a conductive polymer having a sulfonic group or carboxyl group is proposed. In addition, as a method to give antistatic properties to a fiber using said conductive polymer, the following method is proposed.

(5) A method to coat said conductive polymer to a fiber surface using a polyester binder (Patent Document 2 and Patent Document 3).
According to the method, humidity dependence which has been a problem of surfactants is restrained, and excellent antistatic properties can be realized. However, there is an issue such that water resistance is insufficient.
[Patent Document 1] Japanese Unexamined Patent Application, First Publication No. Hei 9-67,728
[Patent Document 2] Japanese Unexamined Patent Application, First Publication No. Hei 11-117,178
[Patent Document 3] Japanese Patent No. 3,518,624

### DISCLOSURE OF THE INVENTION

### PROBLEM TO BE SOLVED BY THE INVENTION

Therefore, it is an object of the present invention to provide a conductive material having excellent water resistance and sufficient antistatic properties even under a low temperature and a low humidity. It is another object of the present invention to provide a method for giving electric conductivity to a material, by which the conductive material can be easily obtained at low cost. It is another object of the present invention to provide a method for producing a conductive material.

### MEANS TO SOLVE THE PROBLEM

The present invention is a method for giving electric conductivity to a base material (A) having a nitrogen-containing functional group, which is characterized by soaking the base material (A) in a liquid containing a conductive polymer (B) having at least one kind of sulfonic group and carboxyl group while holding the liquid at a temperature in the range of from 30 to 130°C.
Further, the present invention is a method for producing a conductive material, which is characterized by soaking a base material (A) having a nitrogen-containing functional group in a liquid containing a conductive polymer (B) having at least one kind of=sulfonic group and carboxyl group while holding the liquid at a temperature in the range of from 30 to 130°C.

Further, the present invention is a conductive material to be obtained by the method for giving electric conductivity to a base material or by the method for producing a conductive material according to the present invention.

### EFFECT OF THE INVENTION

According to the method for giving electric conductivity to a base material or the method for producing a conductive material of the present invention, a conductive material having excellent water resistance and sufficient antistatic properties even at a low temperature and a low humidity can be easily obtained at low cost.

### BEST MODE FOR CARRYING OUT THE INVENTION

### (Base material (A))

The base material (A) is a base material having a nitrogen-containing functional group. As the nitrogen-containing functional group, for example, an amide group, imido group, hydrazide group, amidino group, amino group, imino group, and hydrazine group can be mentioned.

As the base material (A), for example, a fiber, film, paper, foam, and shaped article can be mentioned. The method for giving electric conductivity to a material of the present invention is suitable for a fiber, film, foam, and shaped article, among these materials of the base material (A). As the fiber, for example, protein fibers such as wool and silk; polyamide fibers such as nylon; polyimide fibers; and composite fibers of these fibers with chemical fibers such as polyester and polypropylene can be mentioned. As the film, foam, and shaped article, for example, polyamide fibers such as nylon; and polyimide fibers can be mentioned.

### (Conductive polymer (B))

The conductive polymer (B) is a conductive polymer having at least one kind of sulfonic group and carboxyl group.

As the conductive polymer (B), a conductive polymer having at least one kind of repeating units represented by the following formulae (1) to (3) is preferable.

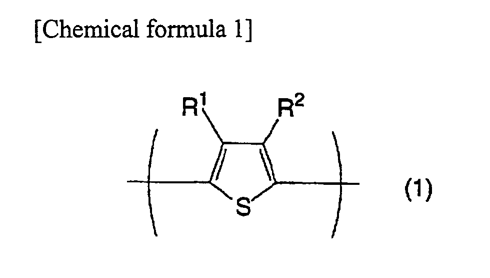

In the formula (1), R¹ and R² independently represent H, -SO₃-, -SO₃H, -R₁₁SO₃-, -R₁₁SO₃H, -OCH₃, -CH₃, -C₂H₅, -F, -Cl, -Br, -I, -N(R₁₂)₂, -NHCOR₁₂, -OH, -O-, -SR₁₂, -OR₁₂, -OCOR₁₂, -NO₂, -COOH, -R₁₁COOH, -COOR₁₂, -COR₁₂, -CHO or -CN, R₁₁ represents an alkylene group having 1 to 24 carbon atoms, arylene group having 1 to 24 carbon atoms, or aralkylene group having 1 to 24 carbon atoms, R₁₂ represents an alkyl group having 1 to 24 carbon atoms, aryl group having 1 to 24 carbon atoms, or aralkyl groups having 1 to 24 carbon atoms, and at least one of R¹ and R² is -SO₃-, -SO₃H, -R₁₁SO₃-, -R₁₁SO₃H, -COOH or -R₁₁COOH.

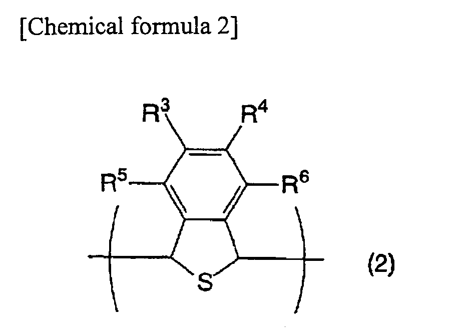

In the formula (2), R³ to R⁶ independently represent H, -SO₃-, -SO₃H, -R₁₁SO₃-, -R₁₁SO₃H, -OCH₃, -CH₃, -C₂H₅, -F, -Cl, -Br, -I, -N(R₁₂)₂, -NHCOR₁₂, -OH, -O-, -SR₁₂, -OR₁₂, -OCOR₁₂, -NO₂, -COOH, -R₁₁COOH, -COOR₁₂, -COR₁₂, -CHO or -CN, Rₗ₁ represents an alkylene group having 1 to 24 carbon atoms, arylene group having 1 to 24 carbon atoms, or aralkylene group having 1 to 24 carbon atoms, R₁₂ represents an alkyl group having 1 to 24 carbon atoms, aryl group having 1 to 24 carbon atoms, or aralkyl groups having 1 to 24 carbon atoms, and at least one of R³ to R⁶ is -SO₃-, -SO₃H, -R₁₁SO₃-, -R₁₁SO₃H, -COOH or -R₁₁COOH.

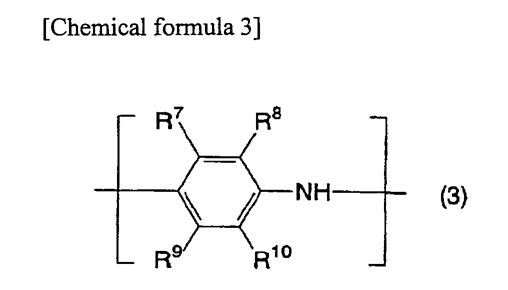

In the formula (3), R⁷ to R¹⁰ independently represent hydrogen, a straight-chain or branched chain alkoxy group having 1 to 24 carbon atoms, or a sulfonic group, and at least one of R⁷ to R¹⁰ is a sulfonic group.

A proportion of the repeating units represented by the formulae (1) to (3) is preferably 20 to 100% by mole in the whole repeating units (100% by mole) constituting the conductive polymer (B). It is preferable for the conductive polymer (B) to have 10 or more repeating units represented by the formulae (1) to (3).

The mass average molecular mass of the conductive polymer (B) is preferably 5,000 to 1,000,000 and more preferably 5,000 to 500,000. If the mass average molecular mass of the conductive polymer (B) is 5,000 or more, electric conductivity, film formability, and film strength may be excellent. If the mass average molecular mass of the conductive polymer (B) is 1,000,000 or less, solubility to a solvent may be excellent. The mass average molecular mass of the conductive polymer (B) is measured by GPC (in terms of polystyrene-sulfonic acid).

### (Method for giving electric conductivity to a material, method for producing a conductive material)

In the method for giving electric conductivity to a material or the method for producing a conductive material of the present invention, the base material (A) is soaked in a liquid containing the conductive polymer (B). In addition, in the present invention, the conductive material means one having a surface resistance value of 10 × 10¹³Ω or less. The surface resistance value can be measured, for example, using HIRESTA IP-MCPHT450 manufactured by DIA Instruments Co., Ltd.

The liquid containing the conductive polymer (B) is prepared by dissolving or dispersing the conductive polymer (B) in a solvent.
As the solvent, water and a mixed solvent of water with an organic solvent soluble in water can be mentioned.
As the organic solvent soluble in water, alcohols such as methanol, ethanol, isopropanol, propyl alcohol, and butanol; ketones such as acetone and ethyl isobutyl ketone; ethylene glycols such as ethylene glycol and ethylene glycol methyl ether; propylene glycols such as propylene glycol, propylene glycol methyl ether, propylene glycol ethyl ether, propylene glycol butyl ether, and propylene glycol propyl ether; amides such as N,N-dimethylformamide and N,N-dimethylacetamide; and pyrrolidones such as N-methylpyrrolidone and N-ethylpyrrolidone can be mentioned. As the solvent, water or a mixed solvent of water with an alcohol is preferable.

The quantity of the conductive polymer (B) in the liquid is preferably 0.001 part by mass or more based on 100 parts by mass of the base material (A) to be soaked in the liquid, more preferably 0.005 part by mass or more, and most preferably 0.01 part by mass or more. If the quantity of the conductive polymer (B) is 0.001 part by mass or more, sufficient electric conductivity may be realized. The quantity of the conductive polymer (B) in the liquid is preferably 200 parts by mass or less based on 100 parts by mass of the base material (A) to be soaked in the liquid and more preferably 150 parts by mass or less.
The content of the conductive polymer (B) in the liquid (100% by mass) containing the conductive polymer (B) is preferably 0.01 to 20% by mass. If the content of the conductive polymer (B) is within the range, electric conductivity of the base material (A) may be effectively improved.

The pH of the liquid containing the conductive polymer (B) before the base material (A) is soaked is preferably 6.0 or less, more preferably 5.0 or less, and most preferably 4.5 or less. If the pH of the liquid containing the conductive polymer (B) is 6.0 or less, a conductive material having excellent electric conductivity may be obtained. As a method for adjusting pH, for example, one in which a compound presenting acidity in a water solution is added can be mentioned. As said compound, mineral acids such as sulfuric acid, hydrochloric acid, and nitric acid; organic carboxylic acids such as acetic acid and formic acid; and organic sulfonic acids such as toluenesulfonic acid, dodecyl benzene sulfonic acid, and methanesulfonic acid can be mentioned.

Additives such as anionic surfactant, cationic surfactant, nonionic surfactant, and inorganic salt may be added to the liquid containing the conductive polymer (B), if necessary.

The temperature of the liquid containing the conductive polymer (B) is 30°C or higher, preferably 50°C or higher, and more preferably 70°C or higher. The temperature of the liquid containing the conductive polymer (B) is 130°C or lower and more preferably 90°C or lower. If the temperature of the liquid containing the conductive polymer (B) is 30°C or higher, water resistance of the conductive material thus obtained is improved. If the temperature of the liquid containing the conductive polymer (B) is 130°C or lower, transformation or change in quality of the base material (A) can be prevented.
A method for heating the liquid containing the conductive polymer (B) is not particularly limited.
Time for soaking the base material (A) in the liquid containing the conductive polymer (B) is preferably 5 minutes or more, more preferably 10 minutes or more, and most preferably 30 minutes or more. The time for soaking is preferably 300 minutes or less and more preferably 120 minutes or less.

According to the method for giving electric conductivity to a material or the method for producing a conductive material of the present invention mentioned above, a conductive material having excellent water resistance and sufficient antistatic properties even at a low temperature and a low humidity can be obtained because the conductive polymer (B) can be held on the base material (A) without using a binder. In addition, the conductive material can be easily obtained at low cost because the base material (A) is merely soaked in the liquid containing the conductive polymer (B).

### EXAMPLES

Hereinafter, the present invention will be explained specifically using examples, however, the present invention is not limited to these examples.

### (Volume resistance value of a polymer)

A volume resistance value of a polymer was measured by four-point probe method, using LORESTA EP MCP-T360 (manufactured by DIA Instruments Co., Ltd.).

### (Surface resistance value)

After having dried the conductive material at 70°C for 10 minutes, a surface resistance value (unit being Ω) of the conductive material was measured by two point-probe method, using HIRESTA IP-MCPHT450 manufactured by DIA Instruments Co., Ltd.

### (Electrification voltage by friction)

After having dried the conductive material at 70°C for 10 minutes, electrification voltage by friction of the conductive material was measured according to a method for measuring electrification voltage by friction as described in JIS L1094. The measurement of electrification voltage by friction was carried out, using a rotary static tester (manufactured by Koa Shokai Ltd., Japan), under the conditions of revolution of a drum of 400rpm, friction time of 60 seconds, and number of times of friction of 10.

### (Water resistance)

After having soaked the conductive material in warm water at 40°C for 24 hours, the warm water was observed by visual observation, and evaluation was carried out by the following standard.
○: Warm water is not colored.
△: Warm water is slightly colored.
× : Warm water is clearly colored.

### (Surface resistance value after a water resistant test)

Five grams of the conductive material was soaked in 100ml of warm water at 40°C for 24 hours and then dried at 70°C for 10 minutes. After the drying, a surface resistance value of the conductive material was measured by two point-probe method, using HIRESTA IP-MCPHT450 manufactured by DIA Instruments Co., Ltd.

### (Electrification voltage by friction after a water resistant test)

Five grams of the conductive material was soaked in 100ml of warm water at 40°C for 24 hours and then dried at 70°C for 10 minutes. After the drying, electrification voltage by friction of the conductive material was measured according to a method for measuring frictional charging voltage as described in JIS L1094. The measurement of electrification voltage by friction was carried out, using a rotary static tester (manufactured by Koa Shokai Ltd., Japan), under the conditions of revolution of a drum of 400 rpm, friction time of 60 seconds, and number of times of friction of 10.

### (Base material (A))

Nylon fiber: Nylon Tafta, manufactured by Shikisensha Co., Ltd.
Polyimide fiber: P-84, manufactured by Toyobo Co., Ltd.
Wool fiber: Wool Muslin, manufactured by Shikisensha Co., Ltd.
Polyester fiber: Polyester Tafta, manufactured by Shikisensha Co., Ltd.
Polyester/nylon composite fiber: Savina, manufactured by KB Seiren Ltd.
Nylon film: Harden, manufactured by Toyobo Co., Ltd.
Polyester film: Ester film, manufactured by Toyobo Co., Ltd.

### (Conductive polymer (B))

Conductive polymer (B-1): poly(2-sulfo-5-methoxy-1,4-imino phenylene) produced in production example 1 which will be mentioned later.
Conductive polymer (B-2): Espacer 100, manufactured by TA Chemical Co., Ltd., sulfonic group-containing soluble polythiophene derivative.
Conductive polymer (B-3): Espacer 300, manufactured by TA Chemical Co., Ltd., sulfonic group-containing soluble polyisothianaphthene derivative.

### (Production Example 1)

### Production of a conductive polymer (B-1):

In a 4mol/L aqueous triethylamine solution, 100mmol of 2-aminoanisole-4-sulfonic acid was dissolved at 25°C, and while a thus obtained solution was stirred, 100mmol of an aqueous ammonium peroxodisulfate solution was dropped into the solution. After the dropping finished, stirring was continued at 25°C for 12 hours. After a reaction product was filtrated, washed, and dried, 15g powder of the conductive polymer (B-1) was obtained. The volume resistance value of the conductive polymer (B-1) was 9.0Ω·cm.

### (Measurement of molecular mass)

Molecular mass distribution and molecular mass of the conductive polymer (B) were measured. GPC measurements were carried out (in terms of polystyrene-sulfonic acid) for the measurements of molecular mass distribution and molecular mass, using a GPC column for water solution. As the column, two kinds of columns for water solution were connected for use. In addition, a 0.02M solution of lithium bromide in water/methanol solution having a ratio of 7/3 was used as an eluant.
As results of the GPC measurements, molecular mass distribution and molecular mass of the conductive polymer (B) were obtained as follows.

### (Molecular mass distribution and molecular mass of the conductive polymer (B-1))

Number average molecular mass: 3,100
Mass average molecular mass: 18,000
Molecular mass distribution: 6

### (Molecular mass distribution and molecular mass of the conductive polymer (B-2))

Number average molecular mass: 5,000
Mass average molecular mass: 100,000
Molecular mass distribution: 20

### (Molecular mass distribution and molecular mass of the conductive polymer (B-3))

Number average molecular mass: 12,300
Mass average molecular mass: 302,000
Z-average molecular mass: 52,000
Molecular mass distribution: 26

### (Examples 1 to 26 and Comparative Examples 1 to 3)

To 100ml of pure water, each conductive polymer (B) shown in Table 1 and Table 2 was added, and an acid shown in a column of additives in Table 1 and Table 2 was further added such that pH of the resultant liquid became a value shown in Table 1 and Table 2. Each base material (A) shown in Table 1 and Table 2 was soaked in the aqueous conductive polymer (B) solution thus obtained, and stirred during a soaking time at a soaking temperature as shown in Table 1 and Table 2 to obtain each of conductive materials 1 to 29.
Evaluations were carried out on the conductive materials 1 to 29. The results are shown in Table 4 and Table 5.

**[Table 1]**

| Example Comp. Ex. | Conductive material | Base material (A) (part by mass) | Conductive polymer (B) (part by mass) | Soaking temperature (°C) | Soaking time (min) | pH before soaking | Additive |
|---|---|---|---|---|---|---|---|
| Example 1 | 1 | Wool fiber (100) | B-1 (0.01) | 70 | 45 | 1.5 | Sulfuric acid |
| Example 2 | 2 | Wool fiber (100) | B-1 (0.05) | 70 | 45 | 1.5 | Sulfuric acid |
| Example 3 | 3 | Wool fiber (100) | B-1 (0.1) | 70 | 45 | 1.5 | Sulfuric acid |
| Example 4 | 4 | Wool fiber (100) | B-1 (1.0) | 70 | 45 | 1.5 | Sulfuric acid |
| Example 5 | 5 | Wool fiber (100) | B-1 (5.0) | 70 | 45 | 1.5 | Sulfuric acid |
| Example 6 | 6 | Wool fiber (100) | B-1 (20) | 70 | 20 | 1.5 | Sulfuric acid |
| Example 7 | 7 | Wool fiber (100) | B-1 (1.0) | 40 | 45 | 1.5 | Sulfuric acid |
| Example 8 | 8 | Wool fiber (100) | B-1 (1.0) | 90 | 45 | 1 | Sulfuric acid |
| Example 9 | 9 | Wool fiber (100) | B-1 (1.0) | 90 | 45 | 1.5 | Sulfuric acid |
| Example 10 | 10 | Wool fiber (100) | B-1 (1.0) | 90 | 45 | 3 | Formic acid |
| Example 11 | 11 | Wool fiber (100) | B-1 (1.0) | 90 | 45 | 4.5 | Acetic acid |
| Example 12 | 12 | Wool fiber (100) | B-1 (1.0) | 90 | 45 | 5.5 | Ammonium water |
| Example 13 | 13 | Wool fiber (100) | B-1 (1.0) | 70 | 5 | 1.5 | Sulfuric acid |
| Example 14 | 14 | Wool fiber (100) | B-1 (1.0) | 70 | 10 | 1.5 | Sulfuric acid |
| Example 15 | 15 | Wool fiber (100) | B-1 (1.0) | 70 | 30 | 1.5 | Sulfuric acid |
| Example 16 | 16 | Wool fiber (100) | B-1 (1.0) | 70 | 90 | 1.5 | Sulfuric acid |
| Example 17 | 17 | Wool fiber (100) | B-2 (1.0) | 90 | 45 | 1.5 | Sulfuric acid |
| Example 18 | 18 | Wool fiber (100) | B-3 (1.0) | 90 | 45 | 1.5 | Sulfuric acid |
| Example 19 | 19 | Nylon fiber (100) | B-1 (0.05) | 90 | 45 | 1.5 | Sulfuric acid |
| Example 20 | 20 | Nylon fiber (100) | B-1 (1.0) | 90 | 45 | 1.5 | Sulfuric acid |

**[Table 2]**

| Example Comp. Ex. | Conductive material | Base material (A) (part by mass) | Conductive polymer (B) (part by mass) | Soaking temperature (°C) | Soaking time (min) | pH before soaking | Additives |
|---|---|---|---|---|---|---|---|
| Example 21 | 21 | Nylon fiber (100) | B-1 (10) | 90 | 45 | 1.5 | Sulfuric acid |
| Example 22 | 22 | Polyimide fiber (100) | B-1 (1.0) | 90 | 30 | 1.5 | Sulfuric acid |
| Example 23 | 23 | Polyester/Nylon composite fiber (100) | B-1 (1.0) | 90 | 30 | 1.5 | Sulfuric acid |
| Example 24 | 24 | Polyester/Nylon composite fiber (100) | B-1 (5.0) | 90 | 30 | 1.5 | Sulfuric acid |
| Example 25 | 25 | Nylon film (50) | B-1 (5.0) | 90 | 30 | 1.5 | Sulfuric acid |
| Example 26 | 26 | Nylon film (50) | B-1 (10.0) | 90 | 30 | 1.5 | Sulfuric acid |
| Comp. Ex. 1 | 27 | Wool fiber (100) | B-1 (1.0) | 20 without heating | 45 | 1.5 | Sulfuric acid |
| Comp. Ex. 2 | 28 | Polyester fiber (100) | B-1 (1.0) | 90 | 30 | 1.5 | Sulfuric acid |
| Comp. Ex. 3 | 29 | Polyester film (100) | B-1 (10.0) | 90 | 30 | 1.5 | Sulfuric acid |

### (Comparative Examples 4 and 5)

To a solvent shown in Table 3, a conductive polymer (B) and a binder (MD-1200, manufactured by Toyobo Co., Ltd., water-soluble polyester containing sulfonic group), both shown in Table 3, were added in an amount shown in Table 3 at a room temperature to prepare a conductive composition. The conductive composition thus obtained was applied on a base material (A) shown in Table 3 by dip-coating, and a thus obtained substance was dried under a condition shown in Table 3 to obtain each of conductive materials 30 and 31.
Evaluations were carried out on the conductive materials 30 and 31. The results are shown in Table 5.

**[Table 3]**

| Example Comp. Ex. | Conductive material | Base material (A) (part by mass) | Conductive polymer (B) (part by mass) | Binder (part by mass) | Solvent (part by mass) | Drying temperature (°C) | Drying time |
|---|---|---|---|---|---|---|---|
| Comp. Ex. 4 | 30 | Wool fiber (100) | B-1 (1.0) | MD-1200 (9) | Water (100) | 80 | 10 |
| Comp. Ex. 5 | 31 | Nylon fiber (100) | B-2 (1.0) | MD-1200 (9) | Water (100) | 120 | 2 |

### (Comparative Examples 6 to 10)

Evaluations were carried out on a wool fiber, nylon fiber, polyester fiber, polyester-nylon composite fiber, and nylon film, all of which were untreated. The results are shown in Table 5.

**[Table 4]**

| Example | Conductive material | Surface resistance value | Electrification voltage by friction | Water resistance | Surface resistance value after a water resistant test (Ω) | Electrification voltage by friction after a water resistant test (V) |
|---|---|---|---|---|---|---|
| Example 1 | 1 | 9 × 10¹³ | 2500 | ○ | 9 × 10¹³ | 2500 |
| Example 2 | 2 | 5 × 10¹³ | 2000 | ○ | 5 × 10¹³ | 2000 |
| Example 3 | 3 | 5 × 10¹² | 1500 | ○ | 5 × 10¹² | 1500 |
| Example 4 | 4 | 1 × 10¹⁰ | 100 | ○ | 1 × 10¹⁰ | 100 |
| Example 5 | 5 | 5 × 10⁷ | < 10 | ○ | 5 × 10⁷ | <10 |
| Example 6 | 6 | 5 × 10⁷ | < 10 | ○ | 8 × 10⁷ | <10 |
| Example 7 | 7 | 1 × 10¹⁰ | 100 | △ | 5 × 10¹³ | 2500 |
| Example 8 | 8 | 8 × 10⁹ | 80 | ○ | 8 × 10⁹ | 80 |
| Example 9 | 9 | 1 × 10¹⁰ | 100 | ○ | 1 × 10¹⁰ | 100 |
| Example 10 | 10 | 1 × 10¹¹ | 120 | ○ | 1 × 10¹¹ | 120 |
| Example 11 | 11 | 5 × 10¹² | 200 | ○ | 5 × 10¹² | 200 |
| Example 12 | 12 | 10 × 10¹³ | 2800 | ○ | > 10¹³ | 2900 |
| Example 13 | 13 | 1 × 10¹⁰ | 100 | △ | 5 × 10¹² | 250 |
| Example 14 | 14 | 1 × 10¹⁰ | 100 | ○ | 1 × 10¹¹ | 120 |
| Example 15 | 15 | 1 × 10¹⁰ | 100 | ○ | 1 × 10¹⁰ | 100 |
| Example 16 | 16 | 1 × 10¹⁰ | 100 | ○ | 1 × 10¹⁰ | 100 |
| Example 17 | 17 | 5 × 10⁹ | 80 | ○ | 5 × 10⁹ | 80 |
| Example 18 | 18 | 1 × 10⁹ | 60 | ○ | 1 × 10⁹ | 60 |
| Example 19 | 19 | 1 × 10¹³ | 1700 | ○ | 4 × 10¹³ | 2200 |
| Example 20 | 20 | 1 × 10¹¹ | 150 | ○ | 5 × 10¹¹ | 150 |
| Example 21 | 21 | 1 × 10¹⁰ | 100 | ○ | 1 × 10¹⁰ | 100 |
| Example 22 | 22 | 8 × 10⁹ | 80 | ○ | 8 × 10⁹ | 80 |
| Example 23 | 23 | 1 × 10¹² | 1700 | ○ | 4 × 10¹³ | 2200 |
| Example 24 | 24 | 1 × 10¹⁰ | 600 | ○ | 1 × 10¹⁰ | 600 |
| Example 25 | 25 | 1 × 10¹¹ | 800 | ○ | 1 × 10¹¹ | 800 |
| Example 26 | 26 | 1 × 10¹⁰ | 400 | ○ | 1 × 10¹⁰ | 400 |

**[Table 5]**

| Comparative Example | Conductive material | Surface resistance value | Electrification voltage by friction | Water resistance | Surface resistance value after a water resistant test (Ω) | Electrification voltage by friction after a water resistant test (V) |
|---|---|---|---|---|---|---|
| Comp. Ex. 1 | 27 | 1 × 10¹² | 1500 | × | > 10 × 10¹³ | 3000 |
| Comp. Ex. 2 | 28 | 1 × 10¹⁰ | 600 | × | > 10 × 10¹³ | 7000 |
| Comp. Ex. 3 | 29 | > 10 × 10¹³ | 7000 | - | > 10 × 10¹³ | 7000 |
| Comp. Ex. 4 | 30 | 5 × 10⁹ | 70 | × | > 10 × 10¹³ | 2900 |
| Comp. Ex. 5 | 31 | 5 × 10⁹ | 70 | × | > 10 × 10¹³ | 3000 |
| Comp. Ex. 6 | Untreated Wool fiber | > 10 × 10¹³ | 3500 | - | > 10 × 10¹³ | 3500 |
| Comp. Ex. 7 | Untreated Nylon fiber | > 10 × 10¹³ | 3000 | - | > 10 × 10¹³ | 3000 |
| Comp. Ex. 8 | Untreated Polyester fiber | > 10 × 10¹³ | 8000 | - | > 10 × 10¹³ | 8000 |
| Comp. Ex. 9 | Untreated Polyester/Nylon composite fiber | > 10 × 10¹³ | 4500 | - | > 10 × 10¹³ | 4500 |
| Comp. Ex. 10 | Untreated Nylon film | > 10 × 10¹³ | 5500 | - | > 10 × 10¹³ | 5500 |

### INDUSTRIAL APPLICABILITY

According to the method for giving electric conductivity to a material or the method for producing a conductive material of the present invention, a fiber, film, foam, and shaped article, all having antistatic properties, can be produced, and specifically the present invention is useful for the production of textile goods for industrial use such as clothes like antistatic work wear, uniform, suit, and white garment; interior textile goods like carpet, curtain, and chair cover; a hat, shoes, and bag; seats like those in a car, train, and airplane; and the production of processing products for industrial use like antistatic films, antistatic foams, and antistatic shaped articles.

## Claims

1. A method for giving electric conductivity to a base material (A) having a nitrogen-containing functional group, which comprises soaking the base material (A) in a liquid containing a conductive polymer (B) having at least one kind of sulfonic group and carboxyl group while holding the liquid at a temperature in the range of from 30 to 130°C.

2. The method according to claim 1, wherein a concentration of the conductive polymer (B) in the liquid containing the conductive polymer (B) is in the range of from 0.01 to 20% by mass.

3. The method according to claim 1, wherein the pH of the liquid containing the conductive polymer (B) is 6.0 or less.

4. The method according to claim 1, wherein a time for soaking the base material (A) in the liquid containing the conductive polymer (B) is in the range of from 5 to 300 minutes.

5. The method according to claim 1, wherein the base material (A) having a nitrogen-containing functional group is a base material containing at least one functional group selected from amide group, imide group, hydrazide group, amidino group, amino group, imino group, and hydrazine group.

6. The method according to claim 1, wherein the base material (A) having a nitrogen-containing functional group is a fiber.

7. A conductive material to be obtained by the method according to claim 1.

8. A method for producing a conductive material, which comprises soaking a base material (A) having a nitrogen-containing functional group in a liquid containing a conductive polymer (B) having at least one kind of sulfonic group and carboxyl group while holding the liquid at a temperature in the range of from 30 to 130°C.

9. A conductive material to be obtained by the method according to claim 8.
